# EUROPEAN PATENT APPLICATION

(11) **EP 4 283 002 A1**
(43) Date of publication of application: **29.11.2023**
(21) Application number: 23162168.1
(22) Date of filing: 15.03.2023
(51) Int. Cl.: C22C 21/04, B23K 26/00, B23K 26/08, B23K 26/10, C25D 11/02, C25D 11/04, C25D 11/16, F02F 3/10

(54) **PISTON FOR INTERNAL COMBUSTION ENGINE AND METHOD FOR MANUFACTURING THE SAME**

(30) Priority: 24.05.2022 JP 2022084556
(71) Applicant: Suzuki Motor Corporation, Hamamatsu-shi, Shizuoka 432-8611 (JP)
(72) Inventor: FUJITA, Masahiro, HAMAMATSU-SHI, 432-8611 (JP)
(74) Representative: Plasseraud IP

(57) **Abstract**

[Problem to be Solved]

To provide a piston for an internal combustion engine capable of maintaining excellent sealing performance between an anodized film formed on an inner surface of a top ring groove and a piston ring even when a high-strength material is used as a base material of the piston, and a method for manufacturing the same.

[Solution]

An outer peripheral surface 39 of a piston material 30a formed by using, as a base material, an aluminum alloy containing Si of 5.0 to 20.0% by mass, Cu of more than 1.3% by mass and 5.0% by mass or less, and Ni of more than 1.5% by mass and 3.5% by mass or less is irradiated with a laser beam to form a re-melted rapidly-solidified portion or a silicon dispersed layer 40 in which silicon is dispersed more finely than the base material, a top ring groove 33 is formed in this silicon dispersed layer by cutting, and an anodized film 60 is formed on an inner surface thereof. The processing speed of the laser beam is set in the range of 2,000 to 10,000 mm/min, and the laser beam irradiation is performed while making only a round of the outer peripheral surface of the piston material.

## Description

### [Technical Field]

The present invention relates to a piston for an internal combustion engine and to a method for manufacturing the same, and more particularly, relates to a piston for an internal combustion engine in which an anodized film is provided on an inner surface of a top ring groove, and to a method for manufacturing the same.

### [Background Art]

In recent years, in connection with dealing with environmental regulations, there have been growing demands for higher efficiency and higher compression ratios in internal combustion engines such as automobile engines and for supercharged engines, and the maximum combustion pressure of the internal combustion engines is increasing. Under such circumstances, the temperatures of a piston ring groove (particularly, a top ring groove) and a land portion (particularly, a top land, a second land) of a piston for an internal combustion engine have been increasing as compared with those of conventional internal combustion engines having the same displacement. An anodized film may be formed on the top ring groove of the piston to impart wear resistance. This is because the anodized film has twice or more the hardness of an aluminum alloy which is a base material of the piston, and has excellent wear-resistance characteristics.

With respect to such an anodized film, for example, Patent Literature 1 describes a piston for an internal combustion engine in which an anodized film is provided on at least an inner surface on a second ring groove side of the inner surface of a top ring groove, the inner surface being located in a region with which a top ring is in contact, and the surface roughness Rpk of the anodized film based on JIS B0671-2 is 1.00 µm or less, and it is described that airtightness with the top ring can be enhanced by the anodized film having such a surface roughness, so that blowby gas flow rate and particle count of exhaust fine particles can be reduced.

### [Citation List]

### [Patent Literature]

[Patent Literature 1] JP 2020-204287 A

### [Summary of Invention]

### [Problem to be Solved by the Invention]

However, aluminum alloys that have mechanical properties (fatigue strength, tensile strength, etc.) improved up to a high temperature range and are called high-strength materials which have been increasingly used in recent years, may contain larger amounts of additive elements such as copper (Cu) and nickel (Ni) than conventional aluminum alloys represented by JIS (Japanese Industrial Standards)-AC8A(Al-Si-Cu-Ni-Mg-based) alloys. Such a high-strength material contains a large amount of precipitated primary crystal silicon (Si) which is more coarsely granular (Si particle size is about 30 to 40 µm) than conventional materials, and such granular Si affects film formation of an anodized film and tends to form a film with large unevenness. The inventor of the present application has obtained new knowledge that use of such a high-strength material causes both the surface roughness Ra and the surface roughness Rpk of an anodized film to exceed 1.0 µm when the film thickness of the anodized film is 10 µm, even when an anodization treatment described in Patent Literature 1 is performed.

Therefore, in view of the above problem, the present invention has as an object to provide a piston for an internal combustion engine in which excellent sealing performance can be maintained between an anodized film formed on an inner surface of a top ring groove and a piston ring even when a high-strength material is used for a base material of the piston, and a method for manufacturing the same.

### [Means for Solving the Problem]

In order to attain the above object, an aspect of the present invention is a method for manufacturing a piston for an internal combustion engine, the manufacturing method comprising: a step of emitting a laser beam to a place at which at least a top ring groove is to be formed on an outer peripheral surface of a piston material which is formed by using, as a base material, an aluminum alloy containing Si of 5.0 to 20.0% by mass, Cu of more than 1.3% by mass and 5.0% by mass or less, and Ni of more than 1.5% by mass and 3.5% by mass or less; a step of forming the top ring groove on the outer peripheral surface of the piston material irradiated with the laser beam by cutting; and a step of forming an anodized film on at least a surface of the top ring groove, wherein in the step of emitting the laser beam, a processing speed of the laser beam is set in a range of 2,000 to 10,000 mm/min, and the irradiation of the laser beam is performed while making only a round of the outer peripheral surface of the piston material.

Another aspect of the present invention is a piston for an internal combustion engine having a top ring groove that includes, as a base material, an aluminum alloy containing Si of 5.0 to 20.0% by mass, Cu of more than 1.3% by mass and 5.0% by mass or less, and Ni of more than 1.5% by mass and 3.5% by mass or less, and includes a silicon dispersed layer having an aluminum alloy composition which is located on an inner surface of the top ring groove and in which silicon in the aluminum alloy is more finely dispersed than in the base material, and an anodized film located on a surface of the silicon dispersed layer, wherein an outermost surface layer of each of a top land and a second land which are adjacent to the top ring groove of the piston for an internal combustion engine successively serves as a region which is the anodized film, a region which is the silicon dispersed layer, and a region which is the base material as the outermost surface layer gets away from the top ring groove.

### [Advantageous Effect of Invention]

As described above, according to the present invention, even when an aluminum alloy containing larger amounts of Cu and Ni is used as a base material than a conventional base material, a silicon dispersed layer in which silicon is more finely dispersed than the base material is formed by laser beam irradiation, a top ring groove is formed in the silicon dispersed layer, and an inner surface of the top ring groove is subjected to an anodization treatment, thereby forming an anodized film having a surface roughness Ra and a surface roughness Rpk, both of which are equal to 1.0 µm or less, so that excellent sealing performance with a piston ring can be maintained.

### [Brief Description of Drawings]

[Figure 1] Figure 1 is an optical microphotograph showing an example of a metal structure when a conventional aluminum alloy is used as a base material of a piston for an internal combustion engine.
[Figure 2] Figure 2 is an optical microphotograph showing an example of a metal structure when an aluminum alloy (high-strength material) to be used as a base material of a piston for an internal combustion engine according to the present invention is used.
[Figure 3] Figure 3 is a schematic diagram and a partially enlarged diagram showing an embodiment of the piston for an internal combustion engine according to the present invention.
[Figure 4] Figure 4 is a flow diagram schematically showing the vicinity of a top ring groove in an embodiment of a method for manufacturing a piston for an internal combustion engine according to the present invention.
[Figure 5] Figure 5 is a perspective view schematically showing an example of a laser beam irradiation step in the method for manufacturing the piston for an internal combustion engine according to the present invention.
[Figure 6] Figure 6 is a schematic diagram showing a laser beam irradiation step of a comparative example.
[Figure 7] Figure 7 is a schematic diagram showing an example of an anodization step in the method for manufacturing the piston for an internal combustion engine according to the present invention.
[Figure 8] Figure 8 is a schematic diagram showing a reference example of the anodization step in the method for manufacturing the piston for an internal combustion engine according to the present invention.
[Figure 9] Figure 9 is an optical microphotograph showing an anodized film formed on a re-melted rapidly-solidified portion of Example 3.
[Figure 10] Figure 10 is an optical microphotograph showing an anodized film formed on an untreated portion of Example 3.
[Figure 11] Figure 11 is an optical microphotograph showing an anodized film formed on a re-melted rapidly-solidified portion of Example 4.
[Figure 12] Figure 12 is an optical microphotograph showing an anodized film formed on an untreated portion of Example 4.

### [Mode for Carrying Out the Invention]

An embodiment of a piston for an internal combustion engine and a method for manufacturing the same according to the present invention will be described below with reference to the accompanying drawings. The drawings are drawn with priority given to ease of understanding, and are not drawn to actual scale.

The piston for an internal combustion engine according to the present embodiment is formed by using, as a base material, an aluminum alloy (hereinafter also referred to as a high-strength material) containing silicon (Si) of 5.0 to 20.0% by mass, copper (Cu) of more than 1.3% by mass and 5.0% by mass or less, and nickel (Ni) of more than 1.5% by mass and 3.5% by mass or less, a silicon dispersed layer having an aluminum alloy composition in which Si is dispersed more finely than the base material is formed on a surface of the base material of a top ring groove, and an anodized film is further formed on the surface of this silicon dispersed layer.

In the high-strength material, Si is a component that is crystallized as primary crystal silicon or eutectic silicon and improves heat resistance and wear resistance. Furthermore, Si lowers the coefficient of thermal expansion. If the Si content is 5.0% by mass or more, the coefficient of thermal expansion is low, and wear resistance and strength in a high temperature range can be enhanced, and if the Si content is 20.0% by mass or less, the primary crystal silicon is small, and elongation of the alloy can be improved. The Si content is more preferably 10.0 to 13.0% by mass.

Cu is a component that enhances mechanical strength at room temperature and in a high temperature range and wear resistance. If the Cu content is more than 1.3% by mass, an effect of enhancing strength and wear resistance can be exhibited, and if the Cu content is 5.0% by mass or less, there is no significant decrease in elongation of the alloy, and the specific gravity of the alloy is small. On the other hand, if the Cu content exceeds 5.0% by mass, the elongation is remarkably lowered, and the specific gravity of the alloy increases. The Cu content is more preferably 2.5 to 5.0% by mass.

Ni is a component that mainly enhances strength in a high temperature range and wear resistance, and lowers the coefficient of thermal expansion. If the Ni content exceeds 1.5% by mass, the effect thereof is suitably exhibited, and if the Ni content is 3.5% by mass or less, excellent elongation can be obtained.

Furthermore, in the present embodiment, the aluminum alloy to be used for the base material may be an alloy which includes at least one element selected from the group consisting of chromium (Cr), titanium (Ti), zirconium (Zr), phosphorus (P), iron (Fe), manganese (Mn) and magnesium (Mg) in addition to Si, Cu and Ni described above, the remainder including substantially Al and unavoidable impurities. Preferably, the base material of the aluminum alloy contains Cr of 0.05 to 0.15% by mass, Ti of 0.05 to 0.20% by mass, Zr of 0.05 to 0.30% by mass, Fe of 0.10 to 0.31% by mass, Mn of 0.05% by mass or less, and Mg of 0.5 to 1.1% by mass in addition to the above respective ranges of the Si, Cu, and Ni contents, the remainder including substantially Al and unavoidable impurities. Since Si, Cu, and Ni have already been described, the other components and their contents, etc., will be described.

Cr is a component that strengthens the grain boundaries between crystal grains such as intermetallic compounds, primary crystal silicon, and acicular silicon which are crystallized mainly in the alloy, and improves strength in a high temperature range; if the Cr content is 0.05% by mass or more, the grain boundaries are suitably strengthened to improve the strength in a high temperature range, and if it is 0.15% by mass or less, good toughness and cutting ability can be obtained.

Ti is a component that mainly micronizes crystal grains to enhance heat resistance, castability, and strength. If the Ti content is in the range of 0.05 to 0.20% by mass, the effect thereof is suitably exhibited. The Ti content is preferably 0.05 to 0.15% by weight.

Zr is a component that mainly has an effect of micronizing the crystal grains in the alloy and contributes to enhancement of heat resistance, castability and strength. If the Zr content is in the range of 0.05 to 0.30% by mass, the effect thereof is suitably exhibited. The Zr content is preferably 0.05 to 0.15% by weight.

Fe is a component that mainly crystallizes intermetallic compounds to enhance wear resistance and strength in a high temperature range. Note that when the size of the intermetallic compounds is coarse, a decrease in strength occurs. If the Fe content is in the range of 0.10 to 0.31% by mass, the size of Fe-Mn-based intermetallic compounds can be reduced.

Mn is a component that mainly crystallizes intermetallic compounds to enhance wear resistance and strength in a high temperature range. Note that when the size of the intermetallic compounds is coarse, a decrease in strength occurs. If the Mn content is 0.05% by mass or less, the size of the Fe-Mn-based intermetallic compounds can be reduced. With respect to the lower limit value of the Mn content, no Mn may be contained, or Mn may be contained in an extremely small amount which is the same level as the impurities, for example, it may be 0.001% by mass.

Mg is a component that mainly enhances strength and toughness. If the Mg content is 0.5% by mass or more, an effect of enhancing strength is exhibited, and if the Mg content is 1.1% by mass or less, excellent toughness is obtained.

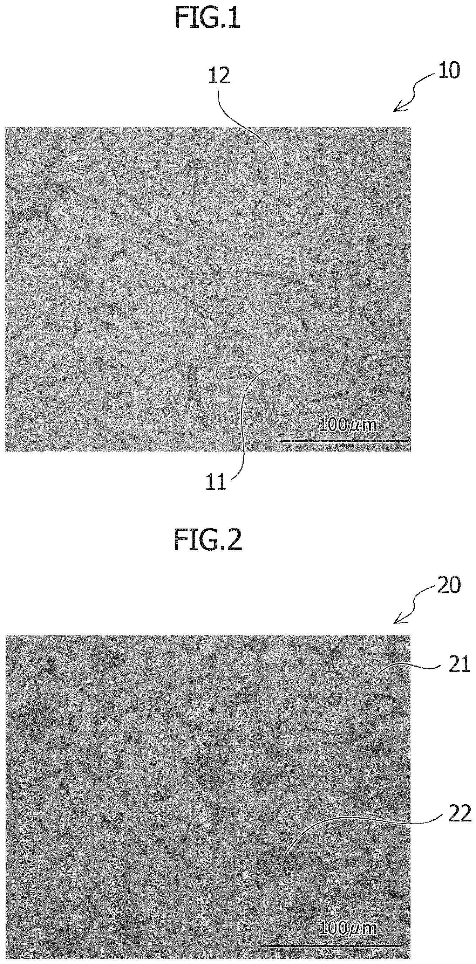

When a piston material is manufactured by using this aluminum alloy that is called a high-strength material as a base material, large amounts of coarser granular primary crystal silicon is precipitated during the manufacturing process than when manufactured by using an aluminum alloy which has been conventionally used. Figure 1 is an optical microphotograph of the metal structure of the base material of the piston when a conventional aluminum alloy (AC8AP) is used, and Figure 2 is an optical microphotograph of the metal structure of the base material of the piston when an aluminum alloy (AC8AR) of a high-strength material to be used in the present invention is used. As shown in Figure 1, a conventional aluminum alloy 10 has large amounts of granular or acicular primary crystal silicon 12 precipitated in a matrix 11. However, as shown in Figure 2, it is found that it is significantly smaller than a granular primary crystal silicon 22 precipitated in a matrix 21 of an aluminum alloy 20 of the high-strength material. It has been conventionally known that such granular primary crystal silicon affects the film formation of an anodized film, and tends to form a film with large unevenness. The particle size of the primary crystal silicon of the high-strength material is about 30 to 40 µm, which is very large in particle size, and even if an AC/DC superimposed electrolysis method is used, both the surface roughness Ra and the surface roughness Rpk of the obtained anodized film exceed 1.0 µm, and thus, there is a problem in that good sealing performance with a piston ring cannot be maintained.

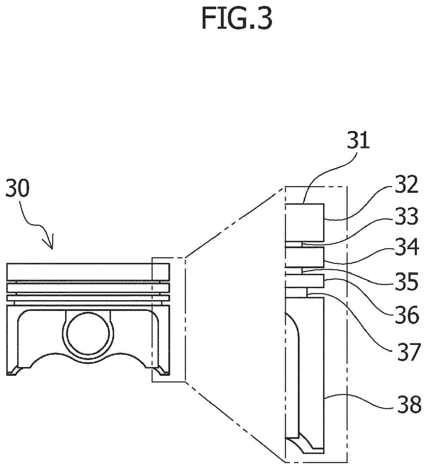

Here, the top ring groove in which the anodized film is formed will be described. As shown in Figure 3, a piston 30 for an internal combustion engine according to the present invention has, as piston ring grooves, three ring grooves of a top ring groove 33, a second ring groove 35, and an oil ring groove 37 which are formed in order from a piston crown surface 31 side on an outer peripheral surface thereof. A top ring (not shown) is fitted in the top ring groove 33, a second ring (not shown) is fitted in the second ring groove 35, and an oil ring (not shown) is fitted in the oil ring groove 37. Along the outer peripheral surface of the piston 30, a portion between the piston crown surface 31 and the top ring groove 33 is called a top land 32, a portion between the top ring groove 33 and the second ring groove 35 is called a second land 34, a portion between the second ring groove 35 and the oil ring groove 37 is called a third land 36, and a portion after the oil ring groove 37 is called a skirt portion 38.

A ring such as the top ring is made of, for example, high-carbon steel, martensitic stainless steel, or the like. In a state in which the piston 30 for an internal combustion engine is inserted in a cylinder bore (not shown), each ring is set to be pressed against an inner wall surface of a cylinder by its elastic force, and the rings such as the top ring function to maintain the airtightness of a combustion chamber. Since the pressure in the combustion chamber on the piston crown surface 31 side increases due to the compression and expansion steps of the piston, an inner surface of the top ring groove 33 particularly comes into strong and close contact with the top ring, so that the inner surface of the top ring groove 33 is likely to be worn. Therefore, an anodized film (not shown) is formed on the inner surface of the top ring groove 33 to enhance the wear resistance of the inner surface of the top ring groove 33.

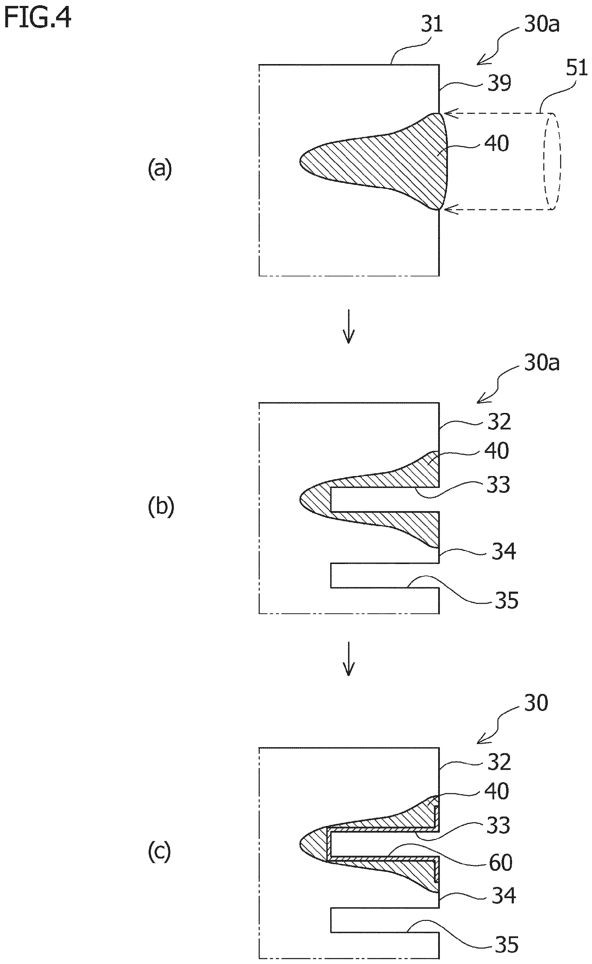

In the present embodiment, the silicon dispersed layer (not shown) having an aluminum alloy composition in which Si is dispersed more finely than the base material is formed on the inner surface of the top ring groove 33, and the anodized film is further formed on a surface of the silicon dispersed layer. A method of forming the anodized film on the surface of the base material of the top ring groove 33 via the silicon dispersed layer will be described with reference to Figure 4.

Figure 4(a) shows an enlarged periphery of the top ring groove in a state of a ring material 30a before formation of the ring grooves such as the top ring groove in manufacturing the piston for an internal combustion engine. The ring material 30a is cast with the above-described high-strength material. As a casting method for a piston may be used, for example, a general method such as a gravity casting method in which a molten aluminum alloy (molten metal) is poured into a mold having a cavity formed in the shape of the piston material to perform casting. The ring material 30a may be subjected to a heat treatment that is generally used when pistons are manufactured. Examples of the heat treatment include T5 treatment, T6 treatment, etc.; the T5 treatment is a treatment which performs only an artificial aging hardening treatment after casting (for the purpose of increasing strength, stabilizing dimensions, etc.), and the T6 treatment is a treatment for performing a solution treatment and the artificial aging hardening treatment after casting (for the purpose of increasing strength and hardness, etc.).

Thereafter, a step of irradiating an outer peripheral surface 39 of the ring material 30a with a laser beam 51 at a place at which the top ring groove is to be formed is performed. The laser beam irradiation is performed so as to re-melt the high-strength material until a depth at which the top ring groove is formed. The re-melted high-strength material is rapidly solidified. As a result, a re-melted rapidly-solidified portion 40 is formed in a region which is larger than the width and depth defining the form of the top ring groove of the ring material 30a. In other words, the laser beam is irradiated on a part of a place to serve as the top land and a part of a place to serve as the second land, both the parts being adjacent to the position at which the top ring groove is to be formed, thereby forming the re-melted rapidly-solidified portion 40. In the re-melted rapidly-solidified portion 40, silicon is more micronized and more uniformly dispersed than in the high-strength material of the base material.

There are various types of lasers such as a TiG laser, a YAG laser, and a CO₂ laser as the laser to be used in this laser beam irradiation step, and any laser can be used. Before the laser beam irradiation, it is preferable to perform a degreasing treatment with a chemical or a cleaning treatment with a laser so that contaminants and the like adhering to the surface of the ring material 30a do not enter the re-melted rapidly-solidified portion 40. In particular, when cleaning and re-melting rapid-solidification are performed with a laser, it is possible to perform the treatments in succession simply by changing the output conditions with a single laser device, which is more preferable.

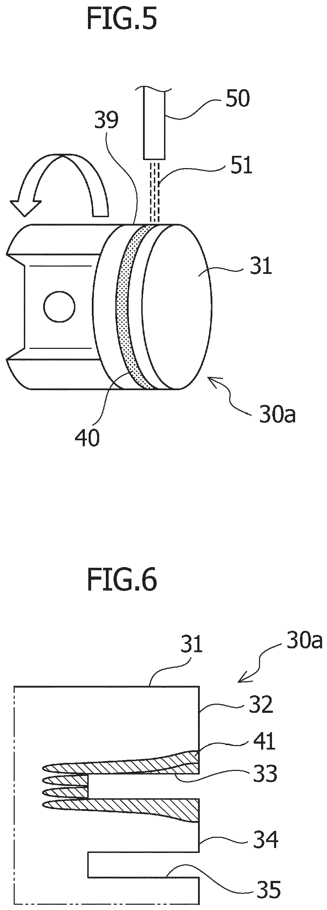

In the laser beam irradiation step, in order to prevent occurrence of cracks caused by the laser beam irradiation, the laser beam irradiation is performed while making only one round of the outer peripheral surface of the piston material 30a. At this time, as shown in Figure 5, a laser device 50 may be fixed, and the piston material 30a may be rotated once around the axis while the laser beam 51 is emitted from the laser device 50, thereby forming the re-melted rapidly-solidified portion 40; conversely, although not shown, the piston material may be fixed, and the laser device may be rotated once around the piston material while the laser beam is emitted from the laser device, thereby forming the re-melted rapidly-solidified portion. The method shown in Figure 5 is more preferable because a mechanism of rotating the piston material is simpler in terms of the structure of the device.

In the laser beam irradiation step, as described above, the laser beam irradiation is performed while making only one round of the outer peripheral surface of the piston material 30a. Therefore, the processing speed of the laser beam is set in the range of 2,000 to 10,000 mm/min. By setting the processing speed of the laser beam to 2,000 mm/min or more, both the surface roughness Ra and the surface roughness Rpk of the subsequently formed anodized film can be set to 1.0 µm or less.

Note that the surface roughness Ra represents the arithmetic average roughness of a contour curve as specified in JIS B0601. The surface roughness Rpk is an index relating to the characteristics of a reduced peak height above a roughness core profile, and it can evaluate the characteristics of the surface of a plateau structure. Note that the term "plateau structure" is defined in JIS-B0671, and it means a structure in which a surface is formed by a plateau portion (flat portion) and a valley portion. The airtightness of the anodized film can be evaluated with the surface roughness Rpk. By setting the surface roughness Rpk of the anodized film to 1.0 µm or less, when explosive combustion occurs in an internal combustion engine, it is possible to suppress passage of a blow-by gas during an actual operation of the engine because there is a large contact area with the top ring and can exhibit excellent airtightness. Furthermore, by setting the surface roughness Ra to 1.0 µm or less, it is possible to suppress deposition of oil on valley portions of the anodized film, so that it is possible to suppress the blow-by gas containing oil components and reduce the number of granular materials.

On the other hand, even when the processing speed exceeds 10,000 mm/min, the surface roughness of the obtained anodized film is almost unchanged, and a larger output is required as the processing speed increases, which causes increase of the equipment cost and power consumption; therefore, the processing speed is preferably 10,000 mm/min or less.

Since it is necessary to cause the re-melted rapidly-solidified portion 40 to have a region which is larger in width and depth than the top ring groove, the output of the laser beam 51 is preferably set to, for example, 1 to 15kW although it changes depending on the width and depth of the top ring groove to be formed and the processing speed described above.

As shown in Figure 6, when the output of the laser beam is reduced and the laser beam irradiation is performed while making several rounds of the outer peripheral surface of the piston material 30a to form the re-melted rapidly-solidified portion 41, the high-strength material can be processed up to the width and depth of the top ring groove 33 in a region narrower than the re-melted rapidly-solidified portion 40 which is formed by making only one round. However, when the laser beam irradiation is performed while making several rounds in that manner, there occurs problems such that cracks are likely to occur in the re-melted rapidly-solidified portion 41, it is difficult to machine the top ring groove 33 with high dimensional accuracy, and the durability of the piston itself is also deteriorated.

Next, as shown in Figure 4(b), a cutting step is performed to form the top ring groove 33 on the re-melted rapidly-solidified portion 40. Machining such as cutting for forming the top ring groove 33 can be performed in the same manner as the machining to be performed in forming the general piston ring grooves. The width and depth of the top ring groove 33 are also the same as the dimension of the top ring groove of a general piston for an internal combustion engine. The entire inner peripheral surface of the top ring groove 33 is the re-melted rapidly-solidified portion 40.

As shown in Figure 4(c), an anodization step is performed to form an anodized film 60 on the inner peripheral surface of the top ring groove 33. The anodized film 60 is a film which is formed by oxidizing aluminum in the re-melted rapidly-solidified portion 40, includes amorphous aluminum oxide (Al₂O₃) as a main component, and has excellent wear resistance. As a result, the inner peripheral surface of the top ring groove 33 of the piston 30 for an internal combustion engine has a structure in which the re-melted rapidly-solidified portion 40 (also referred to as a silicon dispersed layer) having an aluminum alloy composition in which silicon is more micronized and uniformly distributed than the high-strength material is formed on the high-strength material as the base material, and the anodized film 60 is further formed on the silicon dispersed layer 40.

Since the anodized film 60 is formed by oxidizing the aluminum in the re-melted rapidly-solidified portion 40, the surface of the anodized film 60 after the anodization treatment ascends by about half of the film thickness of the anodized film 60 as compared with the surface of the re-melted rapidly-solidified portion 40 before the treatment. In other words, the surface of the re-melted rapidly-solidified portion (silicon dispersed layer) 40 (the interface with the anodized film 60) after the anodization treatment descends by about half of the film thickness of the anodized film 60.

The state of cells of the anodized film 60 can have various structures that differ depending on electrolysis conditions. Such a structure in which the cells envelope the primary crystal silicon in the film in a state in which the cells branch in random directions is preferable. Such a structure can be formed by an AC/DC superimposed electrolysis method, which makes it possible to easily obtain a film having a greater film thickness as compared with a case in which it is formed by a DC electrolysis method.

Considering that the film thickness of the anodized film 60 decreases due to wear with the piston ring during engine operation, the film thickness is preferably 5 µm or more, and more preferably 10 µm or more. The upper limit of the film thickness of the anodized film 60 is preferably 25 µm or less, and more preferably 20 µm or less in consideration of productivity and processing costs. The anodized film 60 may be formed not only on the inner peripheral surface of the top ring groove 33, but also on parts of the top land 32 and the second land 34 which are adjacent to the top ring groove 33.

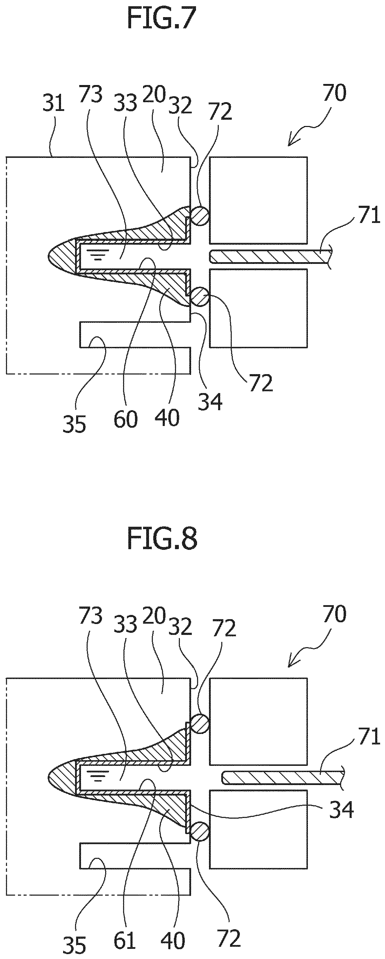

A more specific method of the anodization step will be described with reference to Figure 7. As shown in Figure 7, an anodizing device 70 is first arranged so as to surround the outer peripheral surface of the top ring groove 33. The anodizing device 70 is brought into close contact with the re-melted rapidly-solidified portions 40 of the top land 32 and the second land 34 via sealing rings 72. Energization is performed between the re-melted rapidly-solidified portion 40 serving as an anode and a cathode electrode 71 on the anodizing device 70 side while a processing liquid 73 is fed into the inside of the top ring groove 33 and parts of the top land 32 and the second land 34 up to the sealing rings 72, whereby the anodized film 60 can be formed on the surface of the re-melted rapidly-solidified portion 40 at the portions to which the processing liquid 73 is fed.

As a result, each of the top land 32 and the second land 34 is configured so that three regions are formed where the outermost surface layer changes in order as the distance from the top ring groove 33 increases. In other words, in both the top land 32 and the second land 34, there are a region where the outermost surface layer is the anodized film 60, a region where the outermost surface layer is the re-melted rapidly-solidified portion 40 (silicon dispersed layer), and a region where the outermost surface layer is the high-strength material 20 of the base material in order as the distance from the top ring groove 33 increases.

Conventional electrolytic processing liquids for forming anodized films can be widely adopted as the processing liquid to be used in the anodization step, and it is possible to use, for example, acidic processing liquids such as sulfuric acid (H₂SO₄), oxalic acid (H₂C₂O₄), phosphoric acid (H₃PO₄), and chromic acid (H₂CrO₄), and basic processing liquids such as sodium hydroxide (NaOH), sodium phosphate (Na₃PO₄), and sodium fluoride (NaF), and sulfuric acid is preferable from a practical point of view. Titanium, carbon, aluminum, stainless steel, or the like can be used for the cathode electrode 71. Instead of the sealing ring shown in Figure 7, the anodization treatment may be performed by a method of masking a portion which has not been anodized, immersing the entire piston in the processing liquid, and forming an anodized film on a portion other than the masked portion. However, the sealing ring is preferable because it can enhance the manufacturing efficiency compared with the masking.

In the anodization step, as shown in Figure 8, it is also possible to arrange the sealing rings 72 on portions (untreated portions) of the top land 32 and the second land 34, which are not the re-melted rapidly-solidified portion 40. When the sealing ring 72 is arranged in this way and the anodization treatment is performed, the portion of the high-strength material 20 of the untreated portion is also anodized; therefore, each of the outermost surface layer of the top land 32 and the outermost surface layer of the second land 34 is configured to successively serve as two regions of a region which is the anodized film 60 and a region which is the high-strength material 20 of the base material as the distance from the top ring groove 33 increases. However, in this case, the anodized film formed on the high-strength material 20 of the untreated portion has not only a large surface roughness as described above, but also a remarkably large film thickness which is, for example, about three times of the film thickness of the anodized film formed on the re-melted rapidly-solidified portion 40 where silicon is micronized. Therefore, in the above region where the outermost surface layer described above includes the anodized film 61, portions which are different in the film thickness of the anodized film 61 occur, so that a large step occurs. If there is a stepped portion protruding to the inner wall surface of the cylinder, there is a risk that resistance when the piston makes a sliding motion inside the cylinder bore may increase. Accordingly, the sealing ring 72 is preferably arranged on the re-melted rapidly-solidified portion 40 of each of the top land 32 and the second land 34.

As described above, a piston material is produced by using a high-strength material, a laser beam irradiation step in which a place at which a top ring groove of the piston material is to be formed is irradiated with a laser beam under a predetermined condition, a cutting step of forming a top ring groove on the thus-formed re-melted rapidly-solidified portion, and an anodization step of forming an anodized film on the inner peripheral surface of the top ring groove, whereby the anodized film having a surface roughness Ra and a surface roughness Rpk which are both equal to 1.0 µm or less can be formed on the top ring groove, and therefore excellent sealing performance with the piston ring can be maintained.

### [Examples]

Examples of the present invention and a comparative example will be described below. The present invention is not limited to the following examples and comparative example.

### [Example 1]

A piston material was produced with an Al-Si-Cu-Ni-based aluminum alloy (hereinafter also referred to as a high-strength material) having a composition shown in Table 1. The outer peripheral portion of this piston material was irradiated with a laser beam while the piston material was rotated once about its axis, and a place where a top ring groove was to be formed and the periphery thereof were re-melted and rapidly solidified. The rotation speed of the piston was adjusted so that the processing speed was 1,000 to 30,000 mm/min. Also, the laser output was adjusted in the range of 1 to 15 kW according to the processing speed so that the high-strength material was processed up to the depth of the top ring groove.

### [Table 1]

**TABLE 1: COMPOSITION OF ALUMINUM ALLOY (UNIT: % BY MASS)**

| | Si | Cu | Ni | Cr | Ti | Zr | Fe | Mn | Mg | Al |
|---|---|---|---|---|---|---|---|---|---|---|
| High-strength material | 12.5 | 3.7 | 2.9 | 0.1 | 0.1 | 0.1 | 0.3 | 0.05 | 1.0 | Remainder |

After the re-melting and rapid-solidification by laser beam irradiation was performed, the entire piston was processed by machining to form ring grooves (width 1 mm), and the anodization treatment was performed on the surface of the top ring groove and the re-melted rapidly-solidified portions of the top land and the second land. The anodization treatment used a sulfuric acid processing liquid having a concentration of 200 g/L to form an anodized film having a thickness of about 10 µm according to an AC/DC superimposed electrolysis method (frequency 12 kHz, positive voltage 35 V, negative voltage 2 V), thereby producing a piston for an internal combustion engine. Thereafter, the surface roughness Ra and the surface roughness Rpk of the anodized film were measured with a surface roughness meter in conformity to JIS B0601 and JIS B0671-2, respectively. The result is shown in Table 2.

### [Comparative Example 1]

A piston for an internal combustion engine was produced in the same manner as in Example 1 except that the laser beam irradiation was not performed. In the same manner as in Example 1, the surface roughness Ra and the surface roughness Rpk of the anodized film formed on the top ring groove were measured. The result is shown in Table 2.

### [Table 2]

**TABLE 2: RESULTS OF SURFACE ROUGHNESS VERSUS PROCESSING SPEED**

| | Processing speed [mm/min] | Ra [µm] | Rpk [µm] |
|---|---|---|---|
| Comparative Example 1 | - | 1.2 | 1.7 |
| Example 1 | 1,000 | 1.2 | 1.2 |
| | 2,000 | 0.8 | 1.0 |
| | 5,000 | 0.6 | 0.9 |
| | 9,000 | 0.4 | 0.5 |
| | 10,000 | 0.4 | 0.5 |
| | 30,000 | 0.2 | 0.4 |

As shown in Comparative Example 1 in Table 2, in the case in which the piston material was a high-strength material, when the anodization treatment was performed without performing the re-melting rapid-solidification processing by the laser beam irradiation, the surface roughness Ra of the resulting anodized film was 1.2 µm, and the surface roughness Rpk of the resulting anodized film was 1.7 µm, both of which were values exceeding 1.0 µm. On the other hand, in Example 1 in which the anodization treatment was performed after the re-melting rapid-solidification processing was performed, as shown in Table 2, both the values of the surface roughness Ra and the surface roughness Rpk of the anodized film decreased by increasing the processing speed of the laser beam irradiation, and when the processing speed was equal to 2,000 mm/min or more, both the surface roughness Ra and the surface roughness Rpk were equal to 1.0 µm or less.

Upon comparing the results when the processing speed in Table 2 was 9,000 mm/min, 10,000 mm/min, and 30,000 mm/min, although the processing speed differed greatly among them, the variation in the surface roughness of the resulting anodized films was small. Since the high-strength material is required to be re-melted and rapidly solidified by laser beam irradiation up to the depth where the top ring groove is to be formed during one revolution of the piston material, a greater output is required as the processing speed increases, which causes increase in equipment cost and power consumption. Therefore, the processing speed is preferably 10,000 mm/min or less, and more preferably 9,000 mm/min or less.

While rotating the piston material several times, the outer peripheral surface of the piston material was irradiated with a laser beam so that the laser beam partially overlapped, thereby processing the high-strength material up to the width and depth at which the top ring groove was to be formed. As a result, although the output of the laser beam irradiation could be reduced, it was observed that cracks occurred in a portion which was subjected to such processing. This is inferred to occur because the laser beam irradiation causes the re-melted rapidly-solidified portion to be melted and cooled again.

### [Example 2]

A piston for an internal combustion engine was produced in the same manner as in Example 1, except that the processing speed in the re-melting rapid-solidification processing was set to 9,000 mm/min, and the processing time in the anodization treatment was changed to produce anodized films having different film thicknesses. In the same manner as in Example 1, the surface roughness Ra and the surface roughness Rpk of the anodized film formed on the top ring groove were measured. The result is shown in Table 3.

### [Table 3]

**TABLE 3: RESULTS OF SURFACE ROUGHNESS VERSUS FILM THICKNESS**

| Film thickness [µm] | Ra [µm] | Rpk [µm] |
|---|---|---|
| 7 | 0.5 | 0.6 |
| 17 | 0.5 | 0.7 |
| 20 | 0.4 | 0.6 |

As shown in Table 3, three types of anodized films which were 7 µm to 20 µm in film thickness were formed, but it was found that the surface roughness Ra and the surface roughness Rpk were almost constant irrespective of the film thickness for anodized films in this film thickness range. Generally, in aluminum alloys containing silicon, the surface roughness of the anodized film increases in proportion to the film thickness due to the influence of silicon; however, in the present invention, a film having a low surface roughness can be obtained irrespective of the film thickness because silicon is micronized to be uniformly distributed.

### [Example 3]

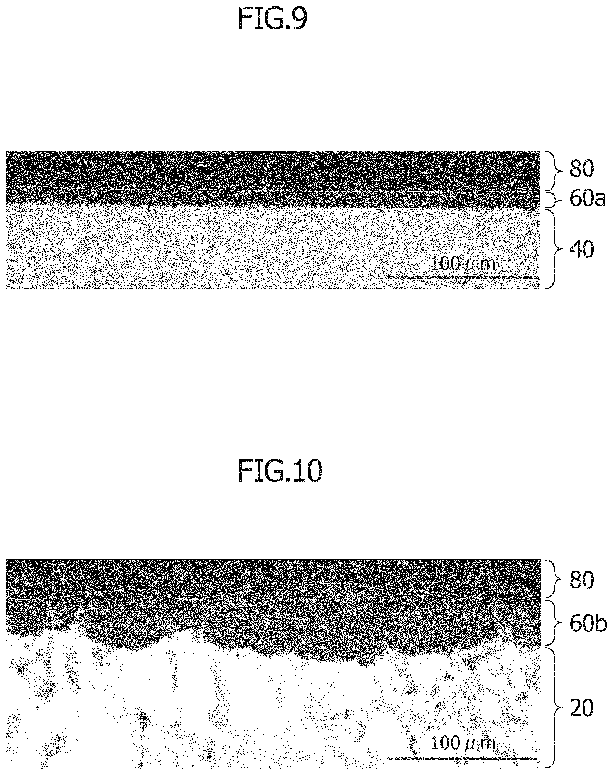

A piston for an internal combustion engine was produced in the same manner as in Example 1, except that a portion other than the re-melted rapidly-solidified portion (untreated portion) of the top land and the second land was also subjected to the anodization treatment in the anodization treatment. In order to observe cross sections of the anodized films formed on the re-melted rapidly-solidified portion and the untreated portion respectively, the piston for an internal combustion engine was cut, and the cross sections were observed with an optical microscope. The cross-sectional images thereof are shown in Figures 9 and 10. Furthermore, the film thicknesses of the anodized films formed on the re-melted rapidly-solidified portion and the untreated portion were measured. In the measurement of the film thickness, the cross section of the anodized film of the cut piston was measured at 10 points at equal intervals with an optical microscope, and the film thickness was calculated by averaging obtained values.

Figure 9 is a cross-sectional image when an anodized film 60a is formed on the re-melted rapidly-solidified portion 40, and Figure 10 is a cross-sectional image when an anodized film 60b is formed on the high-strength material 20 which is the base material of the untreated portion. Note that what can be seen above the anodized films 60a and 60b is embedded resin 80 to be used for observation using an optical microscope, and the boundaries thereof are indicated by dotted lines. As shown in Figures 9 and 10, it was confirmed that in the re-melted rapidly-solidified portion 40 obtained by irradiating the high-strength material 20 with a laser beam under a predetermined condition, silicon was more micronized and uniformly dispersed than that in the high-strength material 20. Furthermore, it was also confirmed that a surface of the re-melted rapidly-solidified portion 40 on the side of the anodized film 60a was flatter than a surface of the high-strength material 20 on the side of the anodized film 60b. Furthermore, it can also be seen from these cross-sectional images that the surface of the anodized film 60a formed on the re-melted rapidly-solidified portion 40 in Figure 9 has a lower surface roughness than the surface of the anodized film 60b formed on the high-strength material 20 in Figure 10.

The film thickness of the anodized film 60a formed on the re-melted rapidly-solidified portion 40 was 10 µm, whereas the film thickness of the anodized film 60b formed on the high-strength material 20 was 35 µm. A difference of three times or more in film thickness occurs as described above due to reduced film formation speed which is caused by the above-described micronization of silicon. Therefore, if the anodization treatment is performed on both the re-melted rapidly-solidified portion and the untreated portion in the top land and the second land, a large step caused by the difference in the film thickness of the anodized film occurs at the boundary between the re-melted rapidly-solidified portion and the untreated portion. If there is such a large step in a part such as a piston for an internal combustion engine of which dimensions are designed precisely, this is not preferable because the step may cause a problem such as unsymmetrical contact. Therefore, it is preferable to perform the anodization treatment only on the re-melted rapidly-solidified portion so that the anodization treatment is not performed on the untreated portion.

### [Example 4]

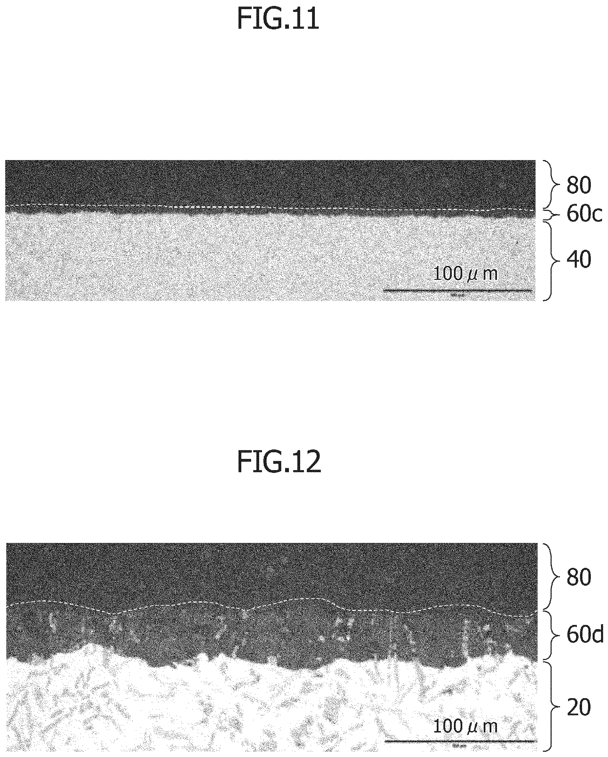

A piston for an internal combustion engine was produced in the same manner as in Example 3, except that the anodization treatment was performed by the DC electrolysis method (current density 9 A/dm²) instead of the AC/DC superimposed electrolysis method. In the same manner as in Example 3, cross-sectional observation and film thickness measurement were performed on the respective anodized films formed on the re-melted rapidly-solidified portion and the untreated portion. Cross-sectional images obtained are shown in Figures 11 and 12.

Figure 11 is a cross-sectional image when an anodized film 60c is formed on the re-melted rapidly-solidified portion 40 by the DC electrolysis method, and Figure 12 is a cross-sectional image when an anodized film 60d is formed on the high-strength material 20 as the base material of the untreated portion by the DC electrolysis method. When compared with Figures 9 and 10 of the AC/DC superimposed electrolysis method, it was observed that in both the AC/DC superimposed electrolysis method and the DC electrolysis method, the surface roughness of the anodized film 60 when the anodized film 60 was formed on the re-melted rapidly-solidified portion 40 was lower than the surface roughness of the anodized film 60 when the anodized film 60 was formed on the high-strength material 20 of the untreated portion.

On the other hand, the film thickness of the anodized film 60c formed on the re-melted rapidly-solidified portion 40 was 4 µm, whereas the film thickness of the anodized film 60d formed on the high-strength material 20 was 34 µm. The reason a difference of twice or more in the film thickness between the anodized films 60a and 60c formed on the re-melted rapidly-solidified portion 40 occurred between the AC/DC superimposed electrolysis method and the DC electrolysis method is as follows: in the re-melted rapidly-solidified portion 40, micronized silicon is in the state of being uniformly distributed, and therefore, in the DC electrolysis method, the cells constituting the anodized film grow linearly, and a large number of silicon particles exist although they are small, which prohibits growth of the cells; on the other hand, in the AC/DC superimposed electrolysis method, the cells grown in random directions, and thus, it is inferred that the cells grow more easily than the cells in the DC electrolysis method. The film thickness of the anodized film to be applied to the piston for an internal combustion engine is preferably 5 µm or more from the viewpoint of wear resistance. Therefore, in consideration of the film thickness, the anodization treatment by the AC/DC superimposed electrolysis method is more preferable than the anodization treatment by the DC electrolysis method.

If the electrolysis condition is enhanced in the DC electrolysis method in order to increase the film formation speed, there is a problem in terms of wear resistance because the heat generated during the anodization treatment increases, the hardness of the anodized film becomes approximately the same as that of the base material (approximately 180 HV), and the film is likely to be in a state in which the film has been subjected to dielectric breakdown, which is called film burning. On the other hand, in the AC/DC superimposed electrolysis method in which the processing is performed at a high frequency (for example, 10 kHz or higher) where heat generation is less likely to occur even if the electrolysis condition is enhanced, it is possible to form an anodized film that satisfies wear resistance in terms of hardness.

### [Reference Signs List]

- 10: Conventional aluminum alloy
- 11, 21: Matrix
- 12, 22: Primary crystal silicon
- 20: High-strength material
- 30: Piston for internal combustion engine
- 31: Piston crown surface
- 32: Top land
- 33: Top ring groove
- 34: Second land
- 40: Re-melted rapidly-solidified portion (silicon dispersed layer)
- 50: Laser device
- 51: Laser beam
- 60: Anodized film
- 70: Anodizing device
- 71: Cathode electrode
- 72: Sealing ring
- 73: Processing liquid

## Claims

1. A method for manufacturing a piston for an internal combustion engine, comprising:
a step of emitting a laser beam to a place at which at least a top ring groove is to be formed on an outer peripheral surface of a piston material which is formed by using, as a base material, an aluminum alloy containing Si of 5.0 to 20.0% by mass, Cu of more than 1.3% by mass and 5.0% by mass or less, and Ni of more than 1.5% by mass and 3.5% by mass or less;
a step of forming the top ring groove on the outer peripheral surface of the piston material irradiated with the laser beam by cutting; and
a step of forming an anodized film on at least a surface of the top ring groove,
wherein in the step of emitting the laser beam, a processing speed of the laser beam is set in a range of 2,000 to 10,000 mm/min, and the irradiation of the laser beam is performed while making only a round of the outer peripheral surface of the piston material.

2. The method for manufacturing a piston for an internal combustion engine according to claim 1,
wherein in the step of emitting the laser beam, the laser beam is irradiated to not only the place at which the top ring groove is to be formed, but also a part of a place to serve as a top land and a part of a place to serve as a second land, both the parts being adjacent to the place at which the top ring groove is to be formed, and
wherein in the step of forming the anodized film, the anodized film is formed on not only the surface of the top ring groove, but also on a surface of a part of a laser beam irradiation portion of the top land and a surface of a part of a laser beam irradiation portion of the second land, both the parts being adjacent to the surface of the top ring groove.

3. The method for manufacturing a piston for an internal combustion engine according to claim 1 or 2, wherein in the step of forming the anodized film, the anodized film is formed by an AC/DC superimposed electrolysis method.

4. The method for manufacturing a piston for an internal combustion engine according to claim 1 or 2, wherein in the step of forming the anodized film, a film thickness of the anodized film is set in a range of 5.0 to 25.0 µm.

5. The method for manufacturing a piston for an internal combustion engine according to claim 2, wherein in the step of forming the anodized film, a sealing ring is arranged on each of the laser beam irradiation portion of the top land and the laser beam irradiation portion of the second land, and a processing liquid is fed into a gap between the sealing ring on the top land side and the sealing ring on the second land side.

6. A piston for an internal combustion engine having a top ring groove that includes, as a base material, an aluminum alloy containing Si of 5.0 to 20.0% by mass, Cu of more than 1.3% by mass and 5.0% by mass or less, and Ni of more than 1.5% by mass and 3.5% by mass or less, and includes:
a silicon dispersed layer having an aluminum alloy composition which is located on an inner surface of the top ring groove and in which silicon in the aluminum alloy is more finely dispersed than in the base material; and
an anodized film located on a surface of the silicon dispersed layer, wherein an outermost surface layer of each of a top land and a second land which are adjacent to the top ring groove of the piston for an internal combustion engine successively serves as a region which is the anodized film, a region which is the silicon dispersed layer, and a region which is the base material as the outermost surface layer increases in distance from the top ring groove.

7. The piston for an internal combustion engine according to claim 6, wherein the anodized film has cells extending in random directions with respect to an inner surface of the top ring groove, the cells enveloping silicon in the anodized film in a state in which the cells are branched in random directions.
